# EUROPEAN PATENT APPLICATION

(11) **EP 3 406 662 A1**
(43) Date of publication of application: **28.11.2018**
(21) Application number: 17207132.6
(22) Date of filing: 13.12.2017
(51) Int. Cl.: C08J 11/04, C08J 5/08

(54) **STRUCTURALLY-REINFORCED PLASTIC COMPOSITE PRODUCTS PRODUCED WITH RECYCLED WASTE GLASS FIBERS AND RECYCLED POLYMER COMPOUNDS AND PROCESS FOR MAKING THE SAME**

(30) Priority: 25.05.2017 US 201762510804 P; 25.10.2017 US 201715793041
(71) Applicant: Nice Glass, LLC, Clayton, MO 63105 (US)
(72) Inventor: COLL, Brian Francis, Zanesville, OH Ohio 43701 (US)
(74) Representative: Schollweck, Susanne

(57) **Abstract**

A recycled fiberglass reinforced polymer composite article and a method of the same are disclosed in the present disclosure. The reinforced composite article is composed of a recycled fiberglass collected from waste streams and functioning as a filler, the recycled fiberglass being 30-70% of a total weight of the reinforced composite article; a colorant of 1-2 % of the total weight of the reinforced composite article; and a recycled resin substantially wetting-out the recycled glass fiber by the black colorant and a chemical binder.

## Description

### CROSS-REFERENCE TO RELATED APPLICATION

This application claims the benefit of a provisional application, entitled, "Recycled Waste Glass Fiber and Recycled Polymer Compound Used to Produce Structural Reinforced Plastic Composite Products," which was filed on May 25, 2017, and assigned Provisional Application Number 62/510,804, which is hereby incorporated by reference in its entirety.

### BACKGROUND

### Field of the Disclosure

The present disclosure relates to a composite article, and more particularly, to a recycled fiberglass reinforced polymer composite article and a method of manufacturing the same. Although the present disclosure is suitable for a wide scope of applications, it is particularly suitable for substantially improving mechanical properties and resolving environmental waste issues by structurally-reinforced plastic composite products produced with recycled waste glass fibers and recycled polymer compounds and process for making the same.

### Description of the Background

Glass fiber manufacturers have faced a cost, environmental and sustainability problem through their requirement to landfill billions of pounds for its wasted fiberglass. Different kinds of post-consumer plastics can degrade at different times, but the average time for a plastic bottle to completely degrade is at least 450 years. It can even take some plastic bottles 1000 years to degrade.

Billions of pounds of unrecycled fiberglass and post-consumer plastics are deposited in landfills every year around the world.

As part of the manufacturing process, all fiberglass companies have waste in their manufacturing process. These volumes may vary from company to company, but can be as high as 54,000,000 pounds annually for a single location. There are over hundred glass plants in North America in the manufacturing process. There is little or no solution to divert such waste streams away from the landfill.

In the railroad industry in North America, 25-millon railroad crossties are replaced every year with creosote treated hardwood-timber that performs in track for as little as 10 years, cannot be disposed of affordably, and is reducing the hardwood stock in North America. The environmental impact of disposing of 25-million railroad ties is a concern for both railroads and the public, with EPA regulating creosote-treated wood crossties with specific waste regulations. The railroads have a cost and reliability problem as well as an environmental and brand problem.

As such, Class I railroads are seeking an alternative to wooden ties that will last longer in track, eliminate environmental concerns on disposal, and cost less over their lifetime than wood. The price and performance of the available polymer composite ties were not competitive with wood ties. In certain southern areas of the country such as Florida and Louisiana, wood ties have a life expectancy of ten years or less. In contrast, composite ties can have a life expectancy of more than 50 years. Because Class I railroads have to deal with limited annual budgets, the ideal polymer composite tie will have low material costs to support a low initial purchase price.

Creosote ties are banned in Europe, with the alternative being hard to use concrete and exotic hardwoods like mahogany. As such, manufacturers have been looking to replace such hardwood timber with polymer composite products.

### SUMMARY

Accordingly, the present disclosure is directed to structurally-reinforced plastic composite products produced with recycled waste glass fibers and recycled polymer compounds and process for making the same that substantially obviate one or more of problems due to limitations and disadvantages of the prior art.

Additional features and advantages of the disclosure will be set forth in the description which follows and in part will be apparent from the description, or may be learned by practice of the invention. Other advantages of the present disclosure will be realized and attained by the structure particularly pointed out in the written description and claims hereof as well as the appended drawings.

To achieve these and other advantages and in accordance with the purpose of the present disclosure, as embodied and broadly described, a reinforced composite article includes a recycled glass fiber from glass waste streams functioning as a filler and the recycled fiberglass being 30-70% of a total weight of the reinforced composite article; a colorant of 1-2 % of the total weight of the reinforced composite article; and a recycled resin substantially wetting-out the recycled glass fiber by the black colorant and a chemical binder.

In the present disclosure, the recycled resin includes at least one of high density polyethylene (HDPE), polypropylene (PP) or an engineering grade resin. The engineering grade resin is selected from acrylonitrile-butadiene-styrene (ABS), polyphenolsulfide (PPS) resin, polyethersulfone (PES) resin, chlorinated polyether resin, acrylic resin, fluorocarbon resin, nylon (polyamide) resin, polystyrene resin, polyethylene resin, polypropylene resin, and vinyl resin.

The colorant includes a black carbon of up to 40% by weight. The chemical binder includes [3-(2-Aminoethylamino)propyl]trimethoxysilane.

The recycled glass fiber has a length of 5-15 mm. The recycled glass fiber includes at least one of cullet, chopped stripped mat, chopped strand, surface veil, micro fiber and chopped filament mat. The cullet has an average diameter of 20-30 µm. The chopped strand mat has an average diameter of 10-20 µm.

The recycled fiberglass reinforced polymer composite article has a modulus of elasticity (MOE) of at least 250,000 psi and a modulus of rupture (MOR) of at least 3,000 psi.

The recycled fiberglass reinforced polymer composite article has a sectional area occupied by voids no more than 3 % of a total area of the article.

In another aspect of the present disclosure, a method of manufacturing a reinforced composite article includes receiving a recycled glass fiber and a recycled resin from waste streams; pulverizing the recycled fiberglass and the recycled resin; applying a chemical binder to the pulverized recycled fiberglass and drying the applied chemical binder; washing the pulverized recycled resin and drying the washed pulverized recycled resin; desiccant drying the dried pulverized recycled resin; gravitational blending the recycled fiberglass and the recycled resin; applying a secondary chemical binder with the blended recycled fiberglass and recycled resin; extruding the blended recycled fiberglass and recycled resin with the applied secondary chemical binder; and mold-filling the extruded fiberglass and recycled resin under pressure to shape the reinforced composite article.

The applying a secondary chemical binder with the blended recycled glass fiber and recycled resin includes applying colorant and a blowing agent. The colorant includes a carbon black of 40% of a total weight of the colorant and the colorant is equal to or less than 2% of a total weight of the reinforced composite article.

The fiberglass is coated by the applied chemical binder at a 5-15% moisture rate.

A quality control testing is performed after washing the pulverized recycled resin and drying the washed pulverized recycled resin.

In the extruding process, the blended recycled glass fiber and recycled resin is carried out under a continuous vacuum condition at a temperature of 450 to 500°F.

The molded glass fiber and recycled resin is under a cooling process after the mold-filling the extruded glass fiber and recycled resin under a temperature of 65°F at least for 60 minutes.

The shaped reinforced composite article is inspected with a non-destructive test using X-ray or ultrasonic and the mold-filling the extruded glass fiber and recycled resin is performed under a delayed chill cycle. The reinforced composite article is manufactured under a flow rate of 4,000 to 5,500 cc/hr.

It is to be understood that both the foregoing general description and the following detailed description are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate aspects of the disclosure and together with the description serve to explain the principle of the disclosure.

In the drawings:
FIG. 1 illustrates a pre-extrusion process of a recycled fiberglass reinforced polymer composite article in the present disclosure;
FIG. 2 illustrates additional pre-extrusion processes and an extrusion process to form a recycled fiberglass reinforced polymer composite article in the present disclosure;
FIG. 3 illustrates an exemplary process for forming a recycled fiberglass reinforced polymer composite railroad tie in the present disclosure;
FIG. 4 is a schematic cross-sectional view of a dyer system for desiccant-drying recycled plastics in the present disclosure;
FIGs. 5A and 5B are perspective views of an extrusion system in the present disclosure;
FIG. 6 is a low magnification optical microscope (OM) image of a composite railroad tie having 30% waste fiberglass in a polyethylene/polypropylene matrix (RT-1) of the present disclosure;
FIG. 7 is a medium magnification optical microscope (OM) image of a composite railroad tie having 30% waste fiberglass in a polyethylene/polypropylene matrix (RT-1) of the present disclosure;
FIG. 8 is a high magnification optical microscope (OM) image of a composite railroad tie having 30% waste fiberglass in a polyethylene/polypropylene matrix (RT-1) of the present disclosure;
FIG. 9 is a low magnification scanning electron microscope (SEM) image of a composite railroad tie having 30% waste fiberglass in a polyethylene/polypropylene matrix (RT-1) of the present disclosure and shows glass particles are bright;
FIG. 10 is a medium magnification scanning electron microscope (SEM) image of a composite railroad tie having 30% waste fiberglass in a polyethylene/polypropylene matrix (RT-1) of the present disclosure and shows glass particles are bright;
FIG. 11 is a high magnification scanning electron microscope (SEM) image of a composite railroad tie having 30% waste fiberglass in a polyethylene/polypropylene matrix (RT-1) of the present disclosure and shows glass particles are bright;
FIG 12 is a higher magnification scanning electron microscope (SEM) image of a composite railroad tie having 30% waste fiberglass in a polyethylene/polypropylene matrix (RT-1) of the present disclosure and shows glass particles are bright;
FIG. 13 a low magnification optical microscope (OM) image of a composite railroad tie with curved edge having 30% waste fiberglass in a polyethylene/polypropylene matrix (RT-2) of the present disclosure;
FIG. 14 a medium magnification optical microscope (OM) image of a composite railroad tie with curved edge having 30% waste fiberglass in a polyethylene/polypropylene matrix (RT-2) of the present disclosure;
FIG. 15 a high magnification optical microscope (OM) image of a composite railroad tie with curved edge having 30% waste fiberglass in a polyethylene/polypropylene matrix (RT-2) of the present disclosure;
FIG 16 is a low magnification scanning electron microscope (SEM) image of a composite railroad tie with curved edge having 30% waste fiberglass in a polyethylene/polypropylene matrix (RT-2) of the present disclosure;
FIG. 17 is a medium magnification scanning electron microscope (SEM) image of a composite railroad tie with curved edge having 30% waste fiberglass in a polyethylene/polypropylene matrix (RT-2) of the present disclosure;
FIG. 18 is a high magnification scanning electron microscope (SEM) image of a composite railroad tie with curved edge having 30% waste fiberglass in a polyethylene/polypropylene matrix (RT-2) of the present disclosure; and
FIG. 19 is a higher magnification scanning electron microscope (SEM) image of a composite railroad tie with curved edge having 30% waste fiberglass in a polyethylene/polypropylene matrix (RT-2) of the present disclosure.

### DETAILED DESCRIPTION

Reference will now be made in detail to aspects of the present disclosure, examples of which are illustrated in the accompanying drawings. However, the present disclosure is not limited to aspects disclosed below, and may be implemented in various forms. These aspects are provided so that the present disclosure will be exhaustively and completely described, and will fully convey the scope of the present disclosure to those skilled in the art to which the present disclosure pertains.

Shapes, sizes, ratios, angles, number, and the like illustrated in the drawings for describing aspects of the present disclosure are merely exemplary, and the present disclosure is not limited thereto. Like reference numerals designate like elements throughout. In the following description, when a detailed description of well-known functions or configurations related to this document is determined to unnecessarily cloud a gist of the disclosure, the detailed description thereof will be omitted.

In the present disclosure, when the terms "include", "have", "comprised of', etc. are used, other components may be added unless "∼ only" is used. A singular expression can include a plural expression as long as it does not have an apparently different meaning in context.

In the explanation of components, even if there is no separate description, it is interpreted as including an error range.

In the description of position relationship, when a structure is described as being positioned "on or above", "under or below", "next to" another structure, this description should be construed as including a case in which the structures contact each other as well as a case in which a third structure is disposed therebetween.

The terms "first", "second", etc. may be used to describe various components, but the components are not limited by such terms. The terms are used only for the purpose of distinguishing one component from other components. For example, a first component may be designated as a second component without departing from the scope of the present disclosure.

The terms used in the present specification are used to describe example aspects of inventive concepts, and not to limit the inventive concepts. A singular form may include a plural form, unless otherwise defined. The terms "comprise" and/or "comprising" specify the existence of mentioned components, steps, operations and/or elements thereof, and do not exclude the existence or addition of one or more components, steps, operations and/or elements thereof.

Various aspects of the present disclosure will be described in detail below with reference to the accompanying drawings. In the following aspects, glass, fiberglass, glass fiber are interchangeably used in the present disclosure. Similarly, although thermoplastics are certain polymers that would soften upon heating and then could be made to flow when a stress is applied, the terms of plastics, polymer, resin, olefins and thermoplastics are used as the same meaning in the present disclosure.

In the present disclosure, reinforced polymer composite articles such as composite rail road ties, composite boards, composite plywood, composite cores and numerous other products can be manufactured from waste recycled fiberglass and recycled thermoplastics.

A composite railroad tie can be formed from the recycled fiberglass and plastics to replace conventional hardwood timber ties. Conceivably, the reinforced composite railroad ties can last fifty years against twenty years for those hardwood timber ties.

The mechanical properties of thermoplastic polymers are considerably improved by the addition of fiberglass. The manufacturing processes used to produce the reinforced thermoplastic composites in the present disclosure are similar to those used to produce the thermoplastic polymer such as extrusion. However, the recycled fiberglass reinforced polymer composite articles and the manufacturing process of the present disclosure provides substantially improved mechanical properties and resolves environmental and costly waste issues.

In general, fiberglass is the structural component of polymer composite article. The longer the fiberglass, the more effectively the polymer is able to grab on and transfer stress to the fiberglass. At lengths about 5-15 mm, the strength of the fiberglass is fully attained, and longer lengths may not provide a significant improvement in mechanical properties while making the material more difficult to process.

In the present disclosure, the processed recycled fiberglass is mixed with the processed recycled plastic to form a polymer composite article by using a chemical binding agent with a specific manufacturing process, so that the fiberglass is allowed to bind with the thermoplastic at the molecular level. In other words, the fiberglass and thermoplastic resin are wet-out during the manufacturing process. Various test results show that these railroad ties exceeded the stringent industry standards. Successful wet-out completely coats the individual fiberglass filament that is free of loose fibers or other debris.

The polymer composite article in the present disclosure is formed from undesirable waste from fiberglass producers utilizing such waste streams as inner peels of roving, scrap roving, scrap chopped strand mat, processing line scrap and basement cullet and pulverizing or chopping such product and blending with recycled unsorted and sorted polymers to make a compound glass reinforced resin to produce structural products such as composite rail road ties, composite boards, composite ply wood, composite cores, and numerous other products.

The polymer composite article is a combination of undesirable glass waste from fiberglass plants, blended with sorted and unsorted polymers such as polyethylene, polypropylene, and various engineering grade resins to produce a composite used to produce both a glass reinforced product and a composite that can be used as a replacement filler to talc and calcium carbonate in polymer compounding.

This composite is eliminating landfill cost for fiberglass manufacturers. The combination of the waste fiberglass along with low cost scrap plastics in the particular percentages produces a strong polymer composite at a low cost. This polymer composite can be used to manufacture plastic products with a high strength at a very low cost. In other words, the combination of the waste fiberglass product, with chopped fiberglass and the low cost recycled plastic originating from mixed plastics creates a strong polymer composite at a very low price.

This composite eliminates waste bills for scrap producers and provides a low cost solution for manufacturers. It allows a strong polymer product to be produced. The advantage over other current reinforced plastic composite is the low cost. The advantage over non-composite materials such as wood and cardboard is the strength and durability - i.e. long life product.

Moreover, these recycled fiberglass and post-consumer plastics can be converted into a new class of industrial material to create various composite articles that can be produced in quality, quantity and affordability to meet the expectations of various industries.

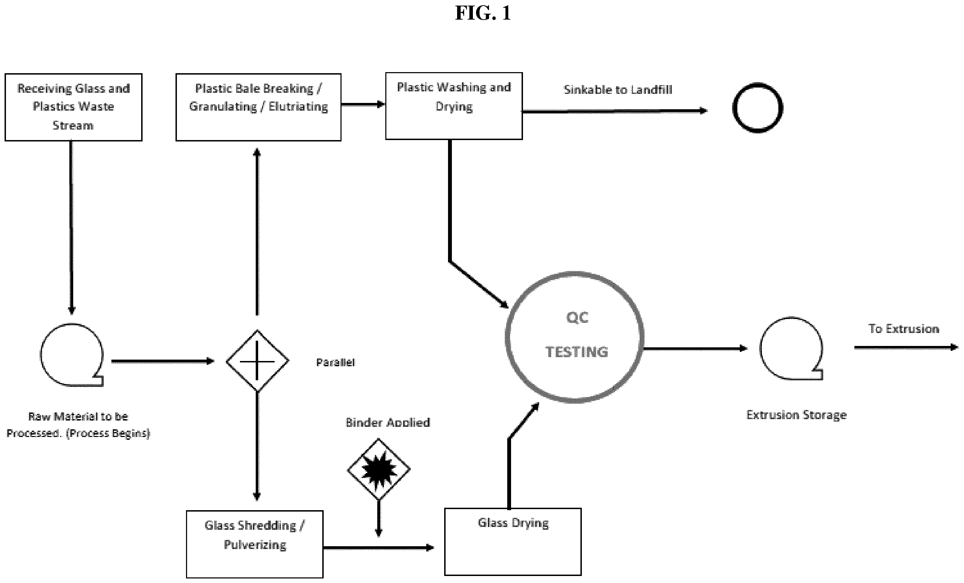

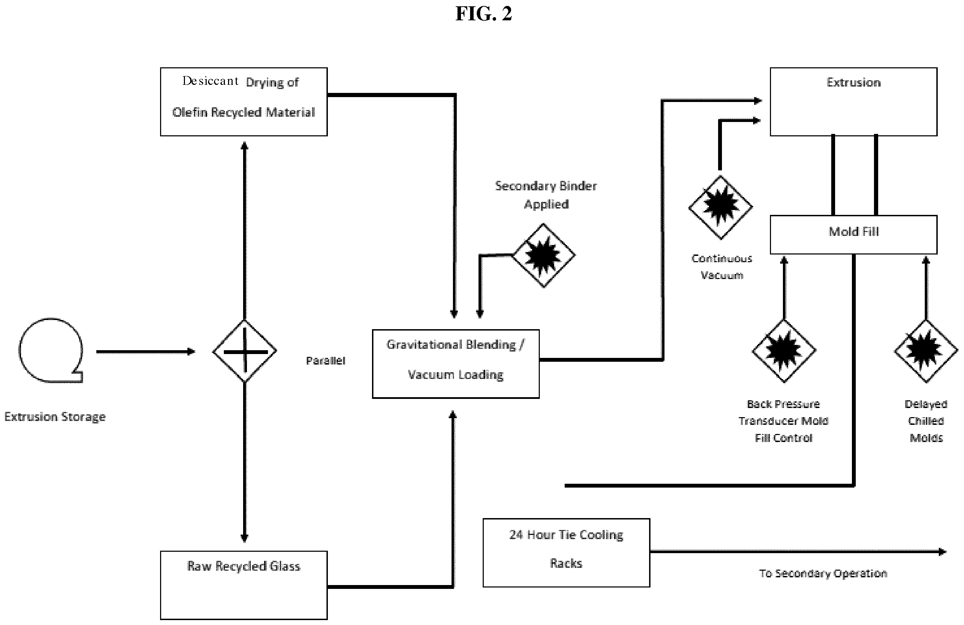

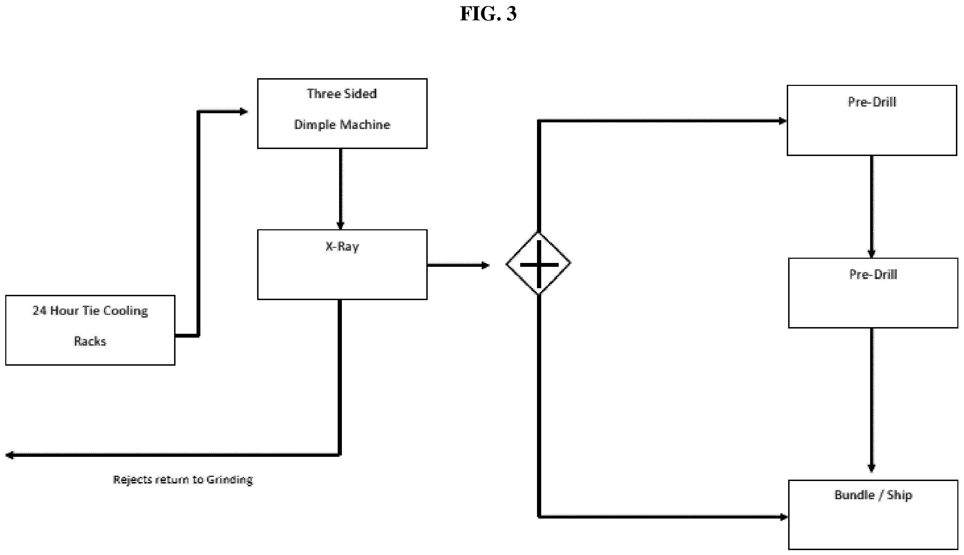

FIGs. 1 to 3 are schematic flow charts illustrating an overall process for manufacturing a recycled fiberglass reinforced polymer composite article. More specifically, FIG. 1 illustrates a pre-extrusion process of a recycled fiberglass polymer composite article. FIG. 2 illustrates additional pre-extrusion processes and an extrusion process to form a reinforced composite article. FIG. 3 illustrates an exemplary process for forming a composite railroad tie.

Referring to FIG. 1, recycled plastic (or resin) scrap from collectors shipped into recycling facility is typically in the form of a bale that is held together with wire straps. In order for the plastic scrap to be processed, the wires are broken and the plastic materials are then loosened for separation (i.e., plastic bale breaking process). The recycled plastic may include high density polyethylene (HDPE), polypropylene (PP), and other engineering grade resin. The other engineering grade resin may refer to acrylonitrile-butadiene-styrene (ABS), polyphenolsulfide (PPS) resin, polyethersulfone (PES) resin, chlorinated polyether resin, acrylic resin, fluorocarbon resin, nylon (polyamide) resin, polystyrene resin, polyethylene resin, polypropylene resin, and vinyl resin. Among them, high density polyethylene (HDPE) and polypropylene (PP) may be the most abundant plastics in the recycled plastic scrap.

High-density polyethylene (HDPE) is one of the most commonly used plastics in the world. Labeled as #2 plastic, it is typically found in plastic bags and refillable plastic bottles such as yogurt & margarine tubes, juice jugs, milk jugs, cereal box liners, food jars, detergent bottles, water jugs, and bottles from household cleaners. In addition to plastic lumber and plastic furniture, recycled HDPE can be used to manufacture lawn and garden products, buckets, crates, office products and automobile parts.

HDPE plastic has several properties that make it ideal as a packaging and manufacturing product. It's stronger than standard polyethylene, acts as an effective barrier against moisture and remains solid at room temperature. It resists insects, rot and other chemicals. HDPE creates no harmful emissions during its production or during its use by the consumer.

On the other hand, polypropylene (PP) is considered one of the most versatile plastics. Polypropylene can be found in just about every market sector that uses plastics. For example, it has been used for kitchen utensils, athletic, apparel area rugs and car batteries. Currently, polypropylene is surpassed in production volume only by polyethylene, discovered a couple decades earlier. Polypropylene has a relatively slippery low energy surface that means many common glues will not form adequate joints.

Like many other thermoplastics, recycled polypropylene (PP) can be melted and reformed into plastic pellets that then are used to make new products. In fact, polypropylene bottles and containers are collected for recycling in most curbside programs across the country.

### Plastic Treatment Process

Referring back to FIG 1, once the plastic materials are sorted, these waste streams yield more than 80% HDPE and PP. After the recycled plastics are loosened, those are fed into a granulator that is used to grind the plastic materials in a chunk shape into tiny partials having a diameter of about 3/8" to ½" (i.e., granulating process).

In most cases, label and paper are removed or separated from the granules by an elutriation system or an aspiration system using blowers to suck lighter paper and fines off the heavier plastics (i.e., elutriating process).

When the plastic scrap is received from the collector, there can be many different plastics included in the recycled plastic scrap. The plastic scrap can be separated from the other plastic scrap by a separation process using a density difference among plastic materials. For example, the plastic scrap includes an olefin based plastic. Olefins may include polypropylene (PP) and high density polyethylene (HDPE). Polypropylene (PP) and high density polyethylene (HDPE) have densities of 0.940 and 0.960, respectively when water has a density of 1.0. Since polypropylene and polyethylene have densities less than water (1.0), those plastics will float in water. All other plastics having a density of greater than 1.0 will sink in water. By washing the plastic scrap in a water tank, an olefin based plastic such as polypropylene and polyethylene can be separated from non-olefin plastics. In addition, dirt and other contamination can be removed from PP and PE (i.e., plastic washing and drying process).

Generally, engineering plastics have a strong affinity for moisture. This is because water molecules form a secondary bond with the polymer molecules deep inside the resin material when the engineering plastics are exposed to moisture. If these molecular bonds are not broken and the moisture is not extracted from the resin before melting processing, it can cause streaks, bubbles, burning, brittleness and other critical defects in the molded or extruded parts. Accordingly, it is essential to dry these resins completely, so that the moisture/polymer bonds are broken, the moisture from the resins surface is removed, and the resin is ready for processing. In the present disclosure, a desiccant drying method is used to dry the washed and sorted resins as shown in FIG. 2.

There are many others ways to dry plastics such as fluid bed dryers, spin dryers and airflow. However, for the process of drying, such methods would be acceptable as long as the dried plastics have the external moisture of lower than 0.05%.

### Glass Treatment Process

Typical glass fibers collected from waste streams to use to reinforce thermoplastic polymers include chopped fibers, chopped strand, chopped strand mats, and cullet, chopped stripped mat, chopped strand, surface veil, micro fiber, spaghetti glass, chopped filament mat and woven roving, etc. For example, the cullet may have an average diameter of 20-30 µm and the chopped strand mat may have an average diameter of 10-20 µm.

The fiberglass is collected in as a 30 yard roll offs with a weight of 40,000 pounds. The glass is dumped at the processing plant and loaded by a material handling crane to an infeed conveyor. Subsequently, the glass is fed to a vibratory conveyor.

Thereafter, fiberglass in various forms is loaded into a dual shaft shredder for initial size reduction. Once the fiberglass is reduced in size, it is fed into a hammer mill or to pulverize for final size reduction. The size of the glass is determined by the size of screens in the bottom of the hammer mill. If the desired size of glass needed is about 5-15 mm in length, then it is run with a hole size of 5-15 mm on the screen. Once the glass is reduced in size to 5-15 mm or smaller, it falls through the screen hole and is evacuated by either a blower sucking the glass from the machine to the next operation or by auger (i.e., glass shredding/pulverizing process).

A primary binder may be applied to the shredded glass and the glass with the applied binder is loaded to a dryer. For example, the primary binder may include a liquid binder such as a silane-base binder (e.g., [3-(2-Aminoethylamino)propyl]trimethoxysilane). In this process, the silane-base binder may be diluted by water in a ratio of 1:5 to 1:9. Thereafter, the diluted primary binder is mixed with the fiberglass coated with the chemical binder at a 5-15% moisture rate, so that an amount of the fiberglass with respect to an amount of the binder is in the range of 85-95%. Since the liquid binder is mixed with water, it must be dried after applying the binder. The fiberglass coated with the liquid binder is dried and is formed as a pellet through continuous pelletizing equipment. In the present disclosure, the pellet size of the fiberglass may be in the range between 4 mm and 20 mm. The pelletized fiberglass with the primary binder may assist wet-out the fiberglass with the recycled resins in the extrusion process, so that a high density composite article can be manufactured without any significant mechanical defects such as voids and internal cracks. The drying glass may be performed with a fluid bed dryer. Similar to plastics, the external moisture of the fiberglass may not be higher than 0.05%.

### Pre- Extrusion Process

Even though the plastic was dried after washing, scrap plastic has a considerable amount of ethylene vinyl alcohol (EVOH), polyvinyl chloride (PVC) and polyethylene terephthalate (PET) that also float in water. In addition, EVOH has the ability to absorb moisture. Since internal moisture cannot be dried by external moisture drying methods, it must be desiccant-dried prior to extrusion to ensure no moisture is being introduced to the extrusion process (i.e., desiccant drying process).

This is an important process because one of the most critical quality factors in composite railroad ties is existence of voids. Voids are large air pockets inside the tie that are caused by the gasification of moisture in the extrusion process. This may produce brittle tie and low spike pull out force, if not eliminated. It may also cause large weight variation as the void occupies the space where the composite material should be. In order to eliminate voids and to produce a composite tie with little weight variation, one of the required processes is desiccant drying. No matter what recycling system is being used, most resin holds internal moisture due to PVC, PET and EVOH traces in the material. These three materials hold internal moisture so air drying may not fully eliminate the problem. Accordingly, the recycled scrap plastics must be desiccant dried prior to an extruding process.

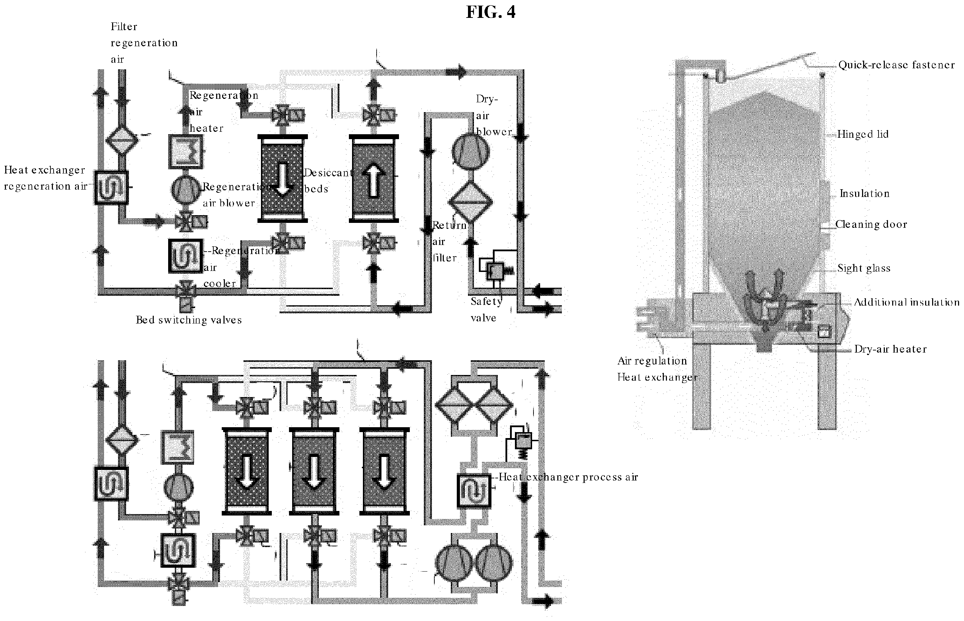

FIG 4 is a schematic cross-sectional view of a regenerative desiccant type dyer system for desiccant-drying recycled plastics in the present disclosure. In the present disclosure, a porous desiccant is used to adsorb the moisture by collecting it in its myriad pores, allowing large quantities of water to be retained by a relatively small quantity of desiccant. Desiccant types may include silica gel, activated alumina, and molecular sieves. In some cases, more than one desiccant type may be used for special drying applications. In most of these cases, a larger particle size (1/4" or more) is used as a buffer zone at the inlet, while a smaller particle size desiccant (1/8" to 1/4") is used for final drying. Where very low dew points are required, molecular sieve desiccant can be added as the final drying agent.

Desiccant dryers all have a built-in regeneration cycle, which can be based upon time, dew point, bed moisture load or a combination of these. During regeneration when the desiccant beds are heated up, a heat exchanger is used to regain the energy from the hot moist exhaust air and the pre-heat the incoming air. Closed-loop cooling is then used in the cool-down phase so that only dry air is used.

In order to effectively remove moisture from the recycled plastics, a greater moisture concentration differential between the plastics and the air surrounding it is needed to be created in the dryer system. In a desiccant dryer, this is accomplished by passing the air through a molecular sieve desiccant, which actually removes moisture from the air, reducing its dew point to -40°F (-40°C).

Next, the air is heated to the drying temperature between 150 and 375°F (65 and 190°C), further lowering the moisture saturation of the air. This hot, dry air is then blown into the bottom of the drying hopper, where it raises plastics temperatures, exciting the water and polymer molecules and breaking the bond between them. Because of the moisture concentration gradient between the polymer and the air, moisture diffuses from the hot shredded plastics. The drying air then exits the hopper, carrying away moisture drawn from the polymer. This moist air is channeled back to the desiccant where it again gives up that moisture before getting reheated and making another pass through the drying hopper.

Eventually, the desiccant itself will become saturated with moisture, which must be removed through a process called regeneration. High-temperature air is blown through the desiccant, drawing out moisture and venting it away from the dryer.

Referring back to FIG. 2, by calculating the bulk density of each of the materials needed to make the product, a gravitational blender can be programed to pull the necessary amounts of each materials storage location and mix them together prior to extruding the product. In this case, it is pulling the glass, plastic, a colorant including a carbon black of about 40% by weight (secondary binder), and a blowing agent (secondary binder) and mixing them together. The colorant content may be 1-2% of the total weight of the product and the colorant and the blowing agent also function to wet-out the fiberglass with the recycled resins in the manufacturing process. The recycled glass and plastics may be mixed at ratios of 30 to 40% fiberglass and 60 to 70% recycled plastics in manufacturing a composite article in the present disclosure (i.e., gravitational blending/vacuum loading process) as shown in FIG. 2.

### Extrusion Process

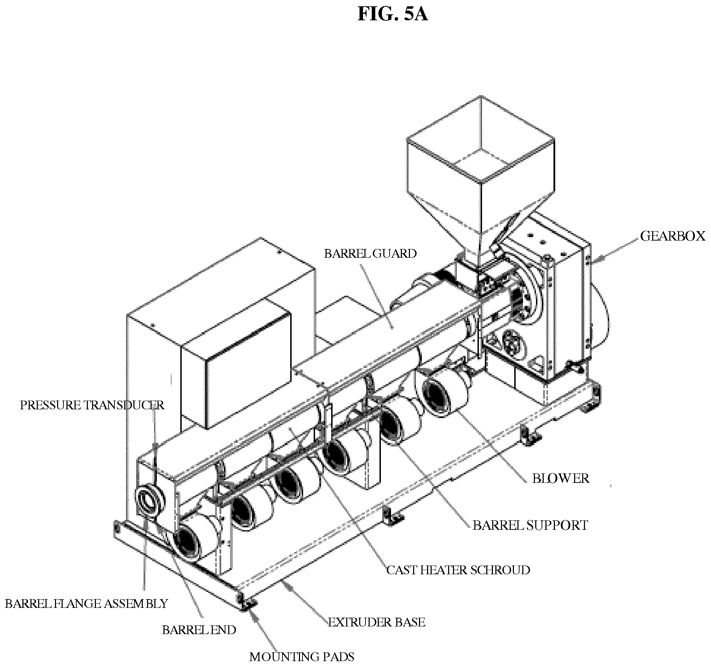

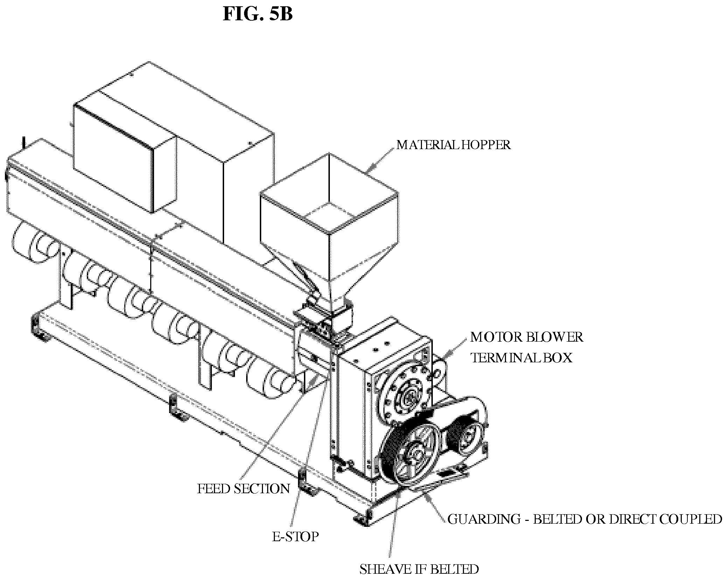

One of the most important methods for processing plastics is extrusion. FIGs. 5A and 5B are perspective views of an extrusion system in the present disclosure. The thermoplastic material usually in the form of granules or powder is placed in a material hopper and is fed into a rotating screw (feed section), which is inside a heated barrel. The screw channel depth is reduced along the barrel so that the material is compacted and at the extremity of the extruder (i.e., barrel end), the melt passes through a die to produce the finished article. By using the appropriate die in the extrusion technique, a wide range of products can be produced.

In the extrusion process, the bulk density of the product is so thick voids are always a significant concern. Voids are caused by gasification of a liquid or a gas during the extrusion process with no exit for such gas. Although significant steps are taken prior to extrusion, an additional step of continuous vacuum on the extrusion barrel is used.

Continuous vacuum is providing a constant suction to the extruder barrel removing any gas or steam in the system, thereby substantially eliminating voids in the composite product. The process may be carried out under a continuous vacuum condition at a temperature of 450 to 500°F (i.e., continuous vacuum process) as shown in FIG. 2.

Instead of using a timed fill method in making the product, a back pressure transducer is measuring the pressure of the mold. Once the pressure reaches a certain psi, the fill is shut off and the next mold begins to fill. This provides a more constant fill flow as well as a much more consistent weight of the product (i.e., back pressure transducer mold fill control process) as shown in FIG. 2.

Each Mold is jacketed with water for cooling. However, to avoid solidification of the melted plastic during the mold fill, the water flow is restricted to post mold fill. This provides a constant flow of material allowing one solid piece of the product that is all cooled at the same time (i.e., delayed chilled molds process) as shown in FIG. 2. In the present disclosure, an overall process is carried out under a flow rate of 4,000 to 5,500 cc/hr.

### Composite Railroad Tie Forming Process

The composite product made for railroad ties has a bulk density. Accordingly, it is normally required to cool the composite product for 24 hours to allow the product to cool and finish shrinking. In the present disclosure, since a thermal expansion of the glass fibers can be improved, a cooling time can be reduced to one or a few hours at a temperature of 65°F (i.e., cooling racks) as shown in FIG. 3.

Each railroad tie is required to have a dimple pattern in the bottom side and the lateral sides (three sides) of the composite tie. Dimples are used to help hold the tie in ballast and prevent shifting and moving in the railroad. Dimples can be applied in two ways. One is a molding method in which a dimple plate is inserted into the mold and dimples are molded into the product as shown in FIG. 3. The other method uses a hydraulic cylinder system and dimples are applied by pressure into the product (i.e., dimpling process).

Although the composite railroad tie is manufactured using state of the art technology of moisture elimination, the product is run through a non-destructive examination machine such as X-ray and ultrasonic devices to verify that no voids are present in the final composite product. Voids having a size bigger than a golf ball may constitute a rejected tie. This is because the tie in the rail seat area having any size of voids may constitute a defect. The rejected tie is sent back to the grinding process for recycling back into the tie feed streams (i.e., non-destructive examination process) as shown in FIG. 3.

On a certain order, a customer may elect to have the ties pre-drilled and plated prior to shipment. Pre-drilling and pre-plating process uses automatic drilling machine with programmed information such as the size of the tie, the specific hole locations of the tie, the tie plate being used and the type of spike. The machine through infra-red scanning drills the holes and the plate and spikes are attached by a hydraulic torch gun. Once the ties are plated, they are sent to a bundling area. Thereafter, the ties are packaged in quantities of 15, for example, banded together and stored for shipment (i.e., pre-drill/bundling process) as shown in FIG. 3.

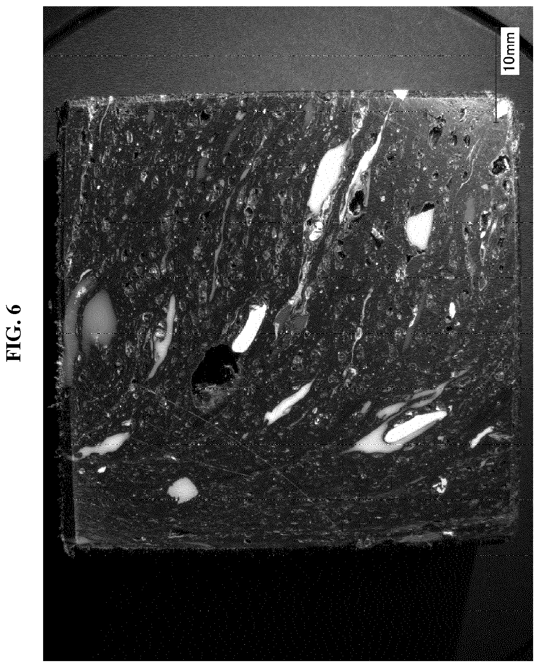

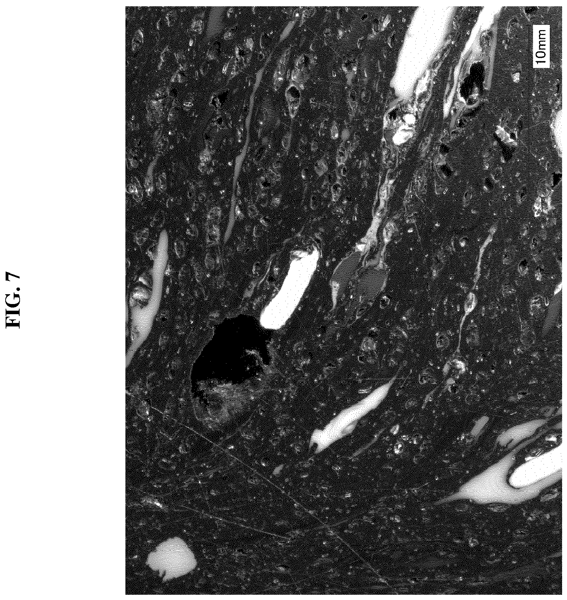

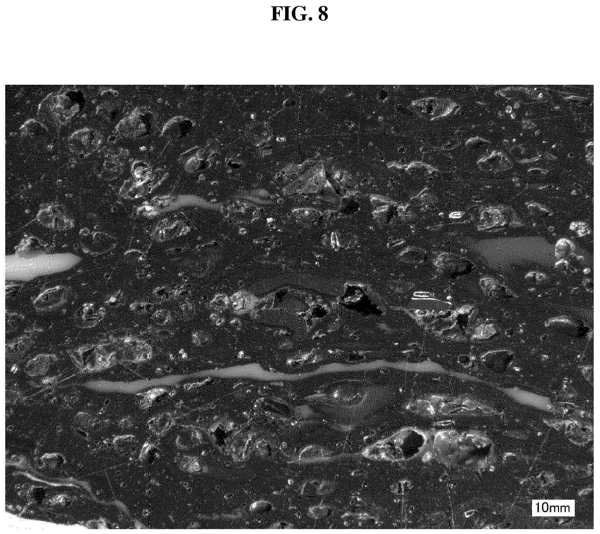

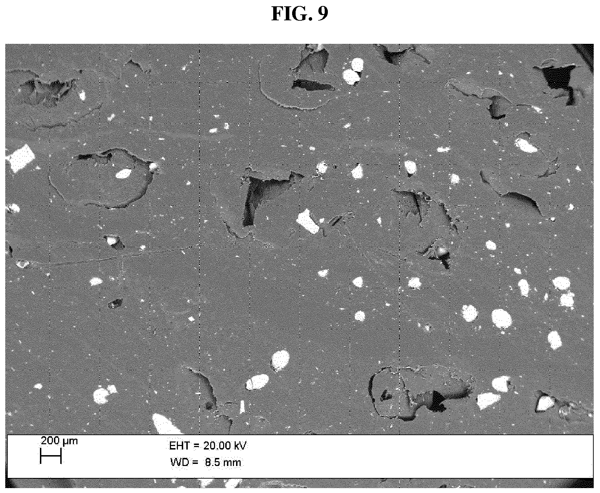

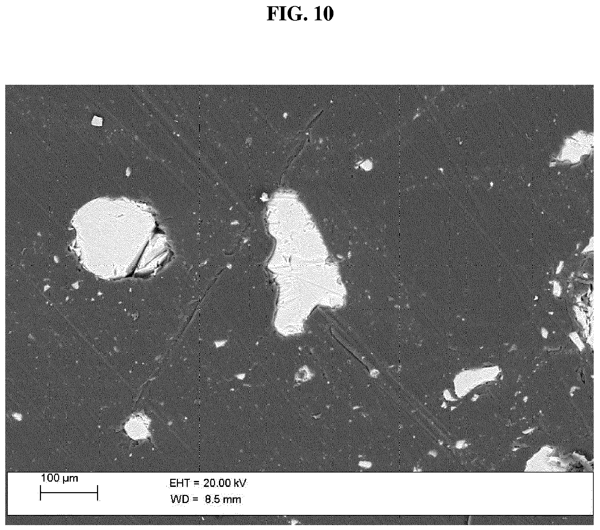

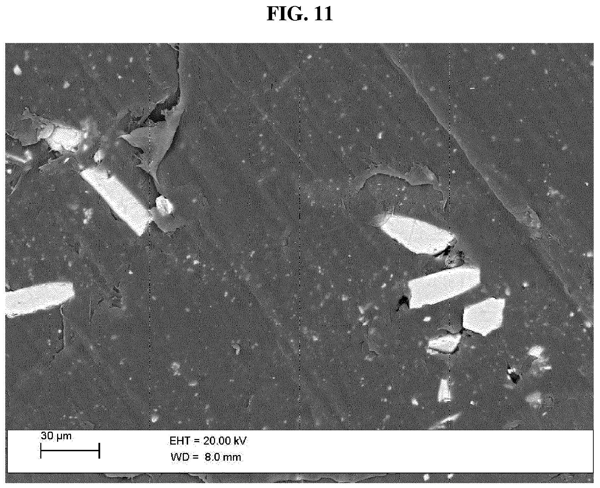

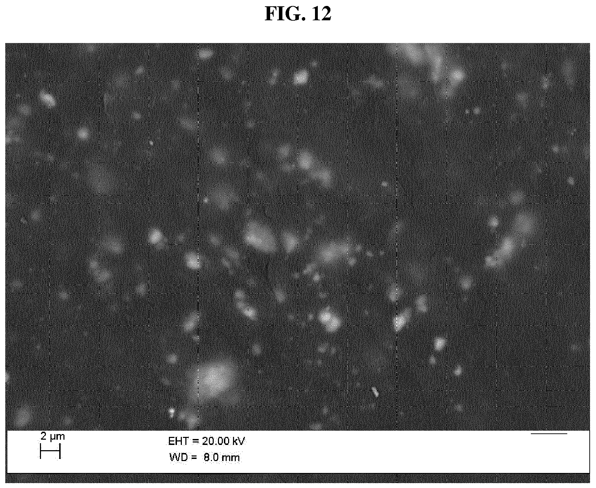

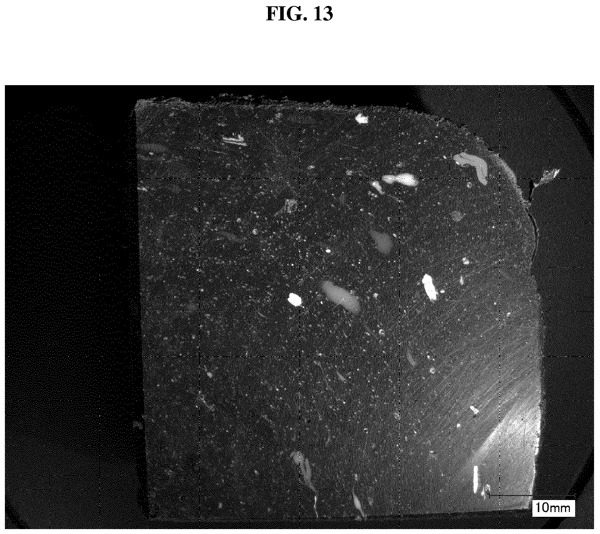

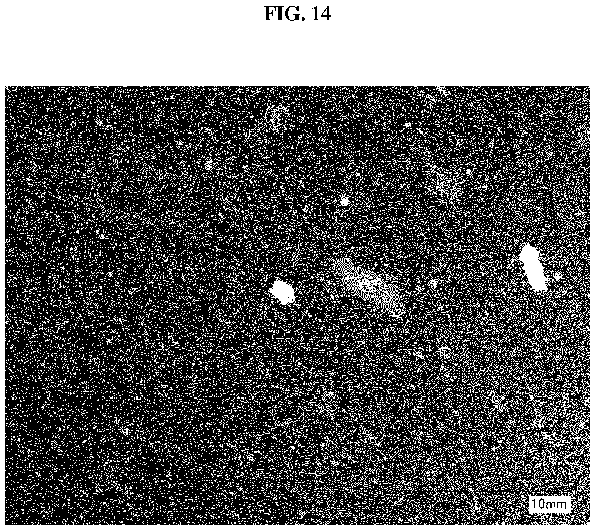

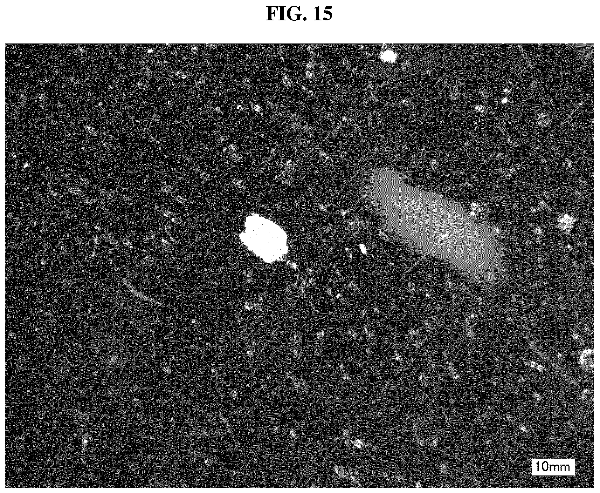

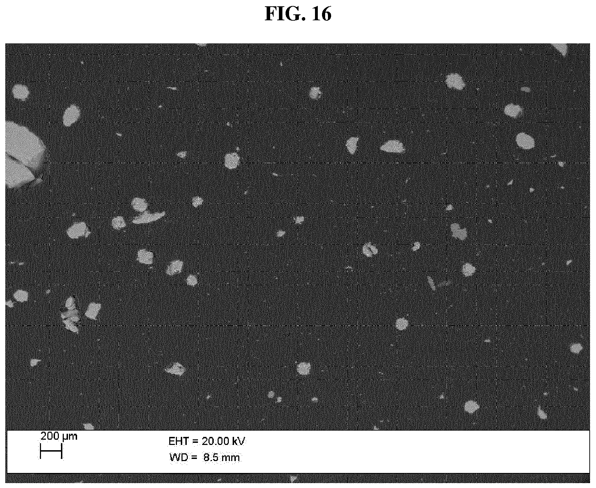

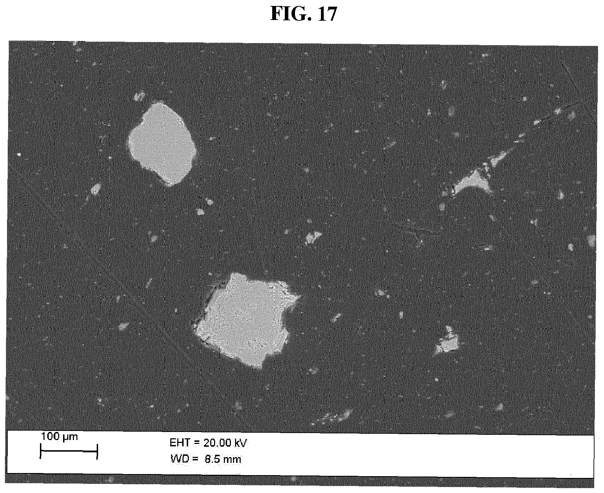

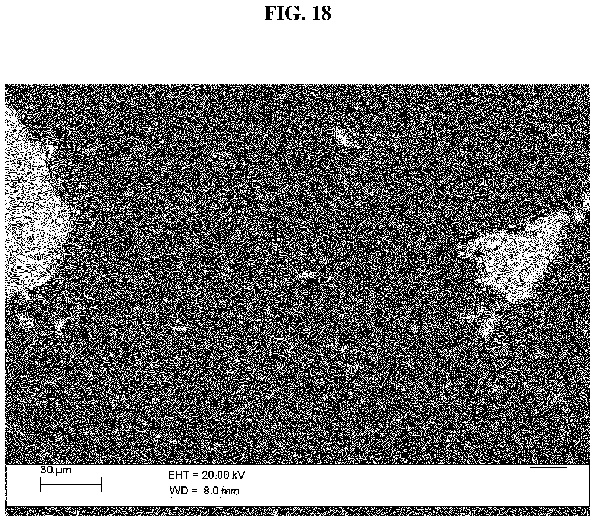

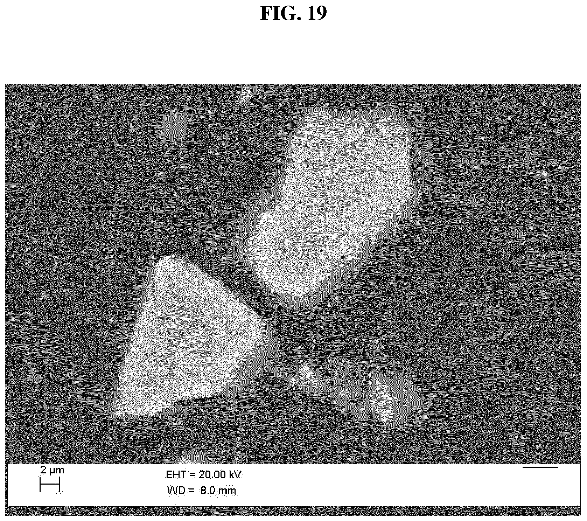

FIGs. 6 to 19 are photographs with optical microscope (OM) and scanning electron microscope (SEM) on a composite railroad tie having 30% waste fiberglass in a polyethylene/polypropylene matrix (RT-1) and a composite railroad tie with curved edge having 30% waste fiberglass in a polyethylene/polypropylene matrix (RT-2) to evaluate wet-out of fiberglass particles contributing mechanical properties of the composite railroad ties in the present disclosure. RT-1 and RT-2 samples have a dimension of 7 x 9 x 102 (inches³), which is the same as American Railway Engineering and Maintenance-of-Way Association (AREMA) standards (7 x 9 x 102 (or 108) (inches³).)

The mechanical behavior of a fiberglass reinforced composite basically depends on the fiber strength and modulus, the chemical stability, matrix strength and the interface bonding between the fiber/matrix to enable stress transfer. Also, the properties of composites depend on the fibers laid or laminated in the matrix during the composite preparation.

In other words, the reinforcement of a low modulus matrix with high strength high modulus fibers utilizes the plastic flow of the matrix under stress to transfer the load to the fiber; this results in a high strength high modulus composite. The aim of the combination is to produce a two phase material in which the primary phase that determines stiffness and is in the form of particles of high aspect ratio is well dispersed and bonded by a weak secondary phase.

The desirable functional requirements of the fibers in a fiber reinforced composite are the fiber should have a high modulus of elasticity for an efficient utilization of reinforcement. The matrix is required to fulfil the conditions to bind together the fiber and protect their surfaces from damage during handling, fabrication and during the service life of the composite. Also, the matrix should be able to disperse and separate them in order to avoid any catastrophic propagation of crack and subsequent failure of the composite. Further, any stresses to the fibers should be efficiently transferred by adhesion and/or friction when the composite is under load.

Sample sections of RT-1 and RT-2 were ground with 5-micron SiC paper to expose internal structures. They were then photographed with the optical microscope (OM) and scanning electron microscope (SEM).

Sets of OM and SEM images are shown in FIGs. 6 to 19 and glass particles are shown in bright images. The wet-out of fiberglass particles in each of the images was excellent. This is because the fiberglass is allowed to bind with the thermoplastic at the molecular level. In other words, the fiberglass and thermoplastic resin are wet-out during the manufacturing process. Successful wet-out completely coats the individual fiberglass filament that is free of loose fibers or other debris. Moreover, the overall void contents in the tested sample ties are very low. In general voids are estimated to be in 1 to 3 area % range.

Further, some of the sample composite railroad ties were tested to check if these ties meet modulus of elasticity (MOE) and modulus of rupture (MOE) under AREMA standards. These parameters measure elasticity and stiffness of composite ties.

More specifically, modulus of elasticity (MOE) is a number that measures an object or substance's resistance to being deformed elastically (i.e., non-permanently) when a stress is applied thereto. MOE of an object is defined as the slope of its stress-strain curve in the elastic deformation region. A stiffer material will have a higher elastic modulus.

Modulus of rupture (MOR) is a measure of a specimen's strength prior to rupture. It can be used to determine a species' overall strength unlike MOE, which measures the object's deflection, but not its ultimate strength. That is to say, some species will bow under stress, but not easily break. MOR and MOE can be expressed in pounds per square inch (PSI)

Other tests such as rail seat compression, spike/screw pull-out, coefficient of thermal expansion, and electrical impedance were performed. The results of the all tests on all composite ties of the present disclosure were shown to meet or exceed all AREMA recommended mechanical and electrical properties for polymer composite ties and are summaries in Table 1.

**Table 1**

| **Property** | **AREMA Standards** | **Comparative Example** | **Present Disclosure** |
|---|---|---|---|
| Modulus of Elasticity | >170,000 psi | 223,635 psi | 359,946 psi |
| Modulus of Rupture | >2,000 psi | 3,846 psi | 4,550 psi |
| Rail Seat (elastic) | <0.25" | N/A | 0.15" |
| Rail Seat (plastic) | <0.125" | 0.043" | 0.045" |
| Spike Pull-Out | > 1,900 lb | 2.541 lb | 2,767 lb |
| Screw Pull-Out | >5,000 lb | 7,103 lb | 12,924 lb |
| Thermal Expansion | >0.000075 | 0.00042 | 0.00001 |
| Electrical Impedance | >20,000 Ω | N/A | > 1.4 million Ω |

In addition, as shown in Table 1, the composite railroad ties of the present disclosure have mechanical and electrical properties that exceed those of the Comparative example.

A fiberglass filament size in the composite ties was analyzed by several testing methodologies such as ASTM D2584-08 (Standard Test Method for Ignition Loss of Cured Reinforced Resins), ASTM E1508-12a (Standard Guide for Quantitative Analysis by Energy-Dispersive Spectroscopy) and ASTM D6370-99 (Standard Test Method for Rubber-Compositional Analysis by Thermogravimetry (TGA)).

The test results revealed that the fiberglass content ranges from about 30 to 50% and the fiberglass content may be up to 70% without significantly deteriorating mechanical and electrical properties. A filament diameter fell into two categories corresponding to two primary fiberglass source streams in the present disclosure, for example. When in-process waste cullet is used, an average diameter is between 20-30 µm. A filament diameter of waste cullet is generally in the range of 130 to 200 µm. When chopped strand mat or roving are used, an average diameter is about 10-20 µm. A filament diameter of strand or roving manufactured by fiberglass producers is generally in the range of 10 to 20 µm.

As described above, reinforced polymer composite articles such as composite rail road ties, composite boards, composite plywood, composite cores and numerous other products can be manufactured from waste recycled fiberglass and recycled thermoplastics in the present disclosure. A composite railroad tie can be formed from the recycled fiberglass and plastics to replace conventional hardwood timber ties and has much improved mechanical electrical properties in the present disclosure.

In the present disclosure, the processed recycled fiberglass is mixed with the processed recycled plastic to form a polymer composite article by using a chemical binding agent with a specific manufacturing process, so that the fiberglass is allowed to bind with the thermoplastic at the molecular level. In other words, the fiberglass and thermoplastic resin are wet-out during the manufacturing process. Various test results show that these railroad ties exceeded the stringent industry standards. Successful wet-out completely coats the individual fiberglass filament that is free of loose fibers or other debris.

The invention provides, in particular, the following:
1. A reinforced composite article, comprising:
   a recycled fiberglass collected from waste streams and functioning as a filler, the recycled fiberglass being 30-70% of a total weight of the reinforced composite article;
   a colorant of 1-2 % of the total weight of the reinforced composite article; and
   a recycled resin collected from the waste streams and substantially wetting-out the recycled glass fiber by the black colorant and a chemical binder.
2. The reinforced composite article of item 1, wherein the recycled resin comprises at least one of high density polyethylene (HDPE), polypropylene (PP) or an engineering grade resin.
3. The reinforced composite article of item 1, wherein the engineering grade resin is selected from one of acrylonitrile-butadiene-styrene (ABS), polyphenolsulfide (PPS) resin, polyethersulfone (PES) resin, chlorinated polyether resin, acrylic resin, fluorocarbon resin, nylon (polyamide) resin, polystyrene resin, polyethylene resin, polypropylene resin, and vinyl resin.
4. The reinforced composite article of item 1, wherein the colorant includes a black carbon of 40% by weight.
5. The reinforced composite article of item 1, wherein the chemical binder includes [3-(2-Aminoethylamino)propyl]trimethoxysilane.
6. The reinforced composite article of item 1, wherein the recycled fiberglass has a length of 5-15 mm.
7. The reinforced composite article of item 1, wherein the recycled fiberglass includes at least one of cullet, chopped stripped mat, chopped strand, surface veil, micro fiber and chopped filament mat.
8. The reinforced composite article of item 7, wherein the cullet has an average diameter of 20-30 µm.
9. The reinforced composite article of item 7, wherein the chopped strand mat has an average diameter of 10-20 µm.
10. The reinforced composite article of item 1, wherein the article has a modulus of elasticity (MOE) of at least 250,000 psi.
11. The reinforced composite article of item 1, wherein the article has a modulus of rupture (MOR) of at least 3,000 psi.
12. The reinforced composite article of item 1, wherein the article has an area occupied by voids no more than 3 % of a total area of the article.
13. A method of manufacturing a reinforced composite article, comprising:
   receiving a recycled glass fiber and a recycled resin from waste streams;
   pulverizing the recycled glass fiber and the recycled resin;
   applying a chemical binder to the pulverized recycled glass fiber and drying the applied chemical binder;
   washing the pulverized recycled resin and drying the washed pulverized recycled resin;
   desiccant-drying the dried pulverized recycled resin;
   gravitational blending the recycled glass fiber and the recycled resin;
   applying a secondary chemical binder with the blended recycled glass fiber and recycled resin;
   extruding the blended recycled glass fiber and recycled resin with the applied secondary chemical binder; and
   mold-filling the extruded glass fiber and recycled resin under pressure to shape the reinforced composite article.
14. The method of item 13, wherein the applying a secondary chemical binder with the blended recycled glass fiber and recycled resin includes applying colorant and a blowing agent.
15. The method of item 13, wherein the colorant includes a carbon black of 40% of a total weight of the colorant and the colorant is equal to or less than 2% of a total weight of the reinforced composite article.
16. The method of item 13, wherein the fiberglass is coated by the applied chemical binder at a 5-15% moisture rate.
17. The method of item 13, further comprising performing a quality control testing after the washing the pulverized recycled resin and drying the washed pulverized recycled resin.
18. The method of item 13, wherein the extruding the blended recycled fiberglass and recycled resin are carried out under a continuous vacuum condition at a temperature of 450 to 500°F.
19. The method of item 13, further comprising cooling the molded fiberglass and recycled resin after the mold-filling the extruded glass fiber and recycled resin.
20. The method of item 19, wherein the comprising cooling the molded fiberglass and recycled resin are carried out under a temperature of 65°F at least for 60 minutes.
21. The method of item 13, further comprising inspecting the shaped reinforced composite article with X-ray or ultrasonic.
22. The method of item 13, wherein the mold-filling the extruded glass fiber and recycled resin is performed under a delayed chill cycle.
23. The method of item 13, wherein the reinforced composite article is manufactured under a flow rate of 4,000 to 5,500 cc/hr.

It will be apparent to those skilled in the art that various modifications and variations can be made in the reinforced composite article and a method of manufacturing the same of the present disclosure without departing from the spirit or scope of the present disclosure. Thus, it is intended that the present disclosure covers the modifications and variations of this disclosure provided they come within the scope of the appended claims and their equivalents.

## Claims

1. A reinforced composite article, comprising:
a recycled fiberglass collected from waste streams and functioning as a filler, the recycled fiberglass being 30-70% of a total weight of the reinforced composite article;
a colorant of 1-2 % of the total weight of the reinforced composite article; and
a recycled resin collected from the waste streams and substantially wetting-out the recycled glass fiber by the black colorant and a chemical binder.

2. The reinforced composite article of claim 1, wherein the recycled resin comprises at least one of high density polyethylene (HDPE), polypropylene (PP) or an engineering grade resin.

3. The reinforced composite article of claim 1 or claim 2, such as of claim 1, wherein the engineering grade resin is selected from one of acrylonitrile-butadiene-styrene (ABS), polyphenolsulfide (PPS) resin, polyethersulfone (PES) resin, chlorinated polyether resin, acrylic resin, fluorocarbon resin, nylon (polyamide) resin, polystyrene resin, polyethylene resin, polypropylene resin, and vinyl resin.

4. The reinforced composite article of any one of claims 1 to 3, such as of claim 1, wherein
(i) the colorant includes a black carbon of 40% by weight;
and/or
(ii) the chemical binder includes [3-(2-Aminoethylamino)propyl]trimethoxysilane; and/or
(iii) the recycled fiberglass has a length of 5-15 mm.

5. The reinforced composite article of any one of claims 1 to 4, such as of claim 1, wherein the recycled fiberglass includes at least one of cullet, chopped stripped mat, chopped strand, surface veil, micro fiber and chopped filament mat.

6. The reinforced composite article of claim 5, wherein
(i) the cullet has an average diameter of 20-30 µm;
and/or
(ii) the chopped strand mat has an average diameter of 10-20 µm.

7. The reinforced composite article of any one of claims 1 to 6, such as of claim 1, wherein the article has
(i) a modulus of elasticity (MOE) of at least 250,000 psi;
and/or
(ii) a modulus of rupture (MOR) of at least 3,000 psi;
and/or
(iii) an area occupied by voids no more than 3 % of a total area of the article.

8. A method of manufacturing a reinforced composite article, comprising:
receiving a recycled glass fiber and a recycled resin from waste streams;
pulverizing the recycled glass fiber and the recycled resin;
applying a chemical binder to the pulverized recycled glass fiber and drying the applied chemical binder;
washing the pulverized recycled resin and drying the washed pulverized recycled resin;
desiccant-drying the dried pulverized recycled resin;
gravitational blending the recycled glass fiber and the recycled resin;
applying a secondary chemical binder with the blended recycled glass fiber and recycled resin;
extruding the blended recycled glass fiber and recycled resin with the applied secondary chemical binder; and
mold-filling the extruded glass fiber and recycled resin under pressure to shape the reinforced composite article.

9. The method of claim 8, wherein the applying a secondary chemical binder with the blended recycled glass fiber and recycled resin includes applying colorant and a blowing agent.

10. The method of claim 8 or claim 9, such as of claim 8, wherein the colorant includes a carbon black of 40% of a total weight of the colorant and the colorant is equal to or less than 2% of a total weight of the reinforced composite article.

11. The method of any one of claims 8 to 10, such as of claim 8, wherein the fiberglass is coated by the applied chemical binder at a 5-15% moisture rate.

12. The method of any one of claims 8 to 11, such as of claim 8, further comprising performing a quality control testing after the washing the pulverized recycled resin and drying the washed pulverized recycled resin.

13. The method of any one of claims 8 to 12, such as of claim 8, wherein the extruding the blended recycled fiberglass and recycled resin are carried out under a continuous vacuum condition at a temperature of 450 to 500°F.

14. The method of any one of claims 8 to 13, such as of claim 8, further comprising cooling the molded fiberglass and recycled resin after the mold-filling the extruded glass fiber and recycled resin.

15. The method of claim 14, wherein the comprising cooling the molded fiberglass and recycled resin are carried out under a temperature of 65°F at least for 60 minutes.

16. The method of any one of claims 8 to 15, such as of claim 8, further comprising inspecting the shaped reinforced composite article with X-ray or ultrasonic.

17. The method of any one of claims 8 to 16, such as of claim 8, wherein
(i) the mold-filling the extruded glass fiber and recycled resin is performed under a delayed chill cycle;
and/or
(ii) the reinforced composite article is manufactured under a flow rate of 4,000 to 5,500 cc/hr.
